# EUROPEAN PATENT SPECIFICATION

(11) **EP 0 279 647 B1**
(45) Date of publication and mention of the grant of the patent: **21.04.1993**
(21) Application number: 88301319.5
(22) Date of filing: 17.02.1988
(51) Int. Cl.: H04N 9/04, H04N 9/093

(54) **Solid-state colour image pick-up apparatus**
Farbfestkörperbildaufnahmegerät
Appareil de prise de vue en couleur à l'état solide

(30) Priority: 20.02.1987 JP 37242/87
(43) Date of publication of application: 24.08.1988
(73) Proprietor: SONY CORPORATION, Tokyo 141 (JP)
(72) Inventor: Nagumo, Fumio c/o Patent Division, Shinagawa-ku Tokyo 141 (JP)
(74) Representative: Thomas, Christopher Hugo

(56) References cited:
- FR-A- 2 555 846
- GB-A- 2 135 851

## Description

This invention relates to solid-state colour image pick-up apparatus.

In colour image pick-up equipment, colour images can be reproduced by producing an image of an object after splitting it into optical images comprising three primary colour images of red, green and blue respectively, and by then superimposing these images. In this process, since superimposition errors, such as registration errors between the different coloured images appear in a reproduced colour image as a colour discrepancy, such errors must be maintained at a minimum level.

Generally, in colour image pick-up equipment, registration errors occur due to colour magnification aberration of the optical image pick-up system. If there are no errors in the centre part of a picture, but registration errors caused by colour magnification aberration increase as the distance from the centre of the picture increases, then it is not possible to eliminate such registration errors simply by making the registration errors at the centre of the picture zero using mechanical registration adjustment.

A known colour television camera with an image pick-up tube effects registration adjustment for eliminating such registration errors by adjusting the mechanical positions of an image pick-up plane of the images for each colour, and by electrically adjusting the deflection system. However, in a solid-state colour television camera using a solid-state image sensor comprising, for example a charge coupled device (CCD), the image pick-up region cannot be adjusted using a deflection system, unlike the image pick-up tube type camera, so mechanical registration adjustment with high precision has been attempted. Moreover, if real time registration adjustment is effected by electrically processing signals in solid-state colour image pick-up devices, complicated superimposition is required, since there are few data available, especially in the vertical direction, and there is a consequent loss of resolution.

According to the present invention there is provided a solid-state image pick-up apparatus comprising:
a colour splitting prism which receives incident light images and splits them into the respective colour elements of red, blue and green light beams; and
a plurality of solid-state image pick-up elements sensitive to the respective red, blue and green beams for supplying analogue signals of three primary colours;
characterized by:
said solid-state image pick-up elements for supplying at least red and blue analogue signals having a number of scanning lines such that higher vertical resolution can be obtained than with the usual number of scanning lines used in a normal broadcasting standard;
a plurality of analogue-to-digital converters for digitising the analogue signals of the three primary colours;
a registration adjustment means to which said digital signals of the three primary colours are supplied, and including delay means for delaying the digital signals corresponding to the red and blue beams and combining means for selectively combining the input and output signals of said delay means;
control means for controlling said registration adjustment means; and a control storage device for supplying data obtained by photographing a test chart for controlling said registration adjustment means to said control means.

The invention will now be described by way of example with reference to the accompanying drawings, throughout which like parts are referred to by like references, and in which:
Figure 1 is a block diagram of an embodiment of solid-state colour image pick-up apparatus according to the invention;
Figure 2 is a block diagram of a registration adjusting circuit in the embodiment of Figure 1; and
Figures 3 to 7 are diagrams for explaining registration adjustment of still images obtained with the embodiment of Figure 1.

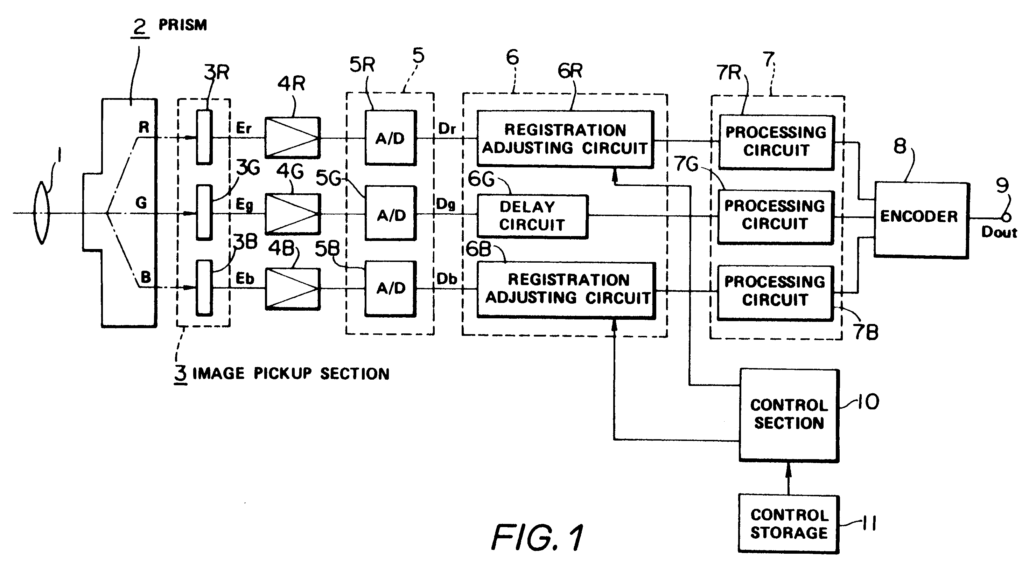

In the embodiment shown in Figure 1, the invention is applied to a so-called three-plate type CCD digital television camera which produces output colour image signals having 525/2 scanning lines per field, of the NTSC system. An image pick-up light beam from an object is guided from an image pick-up lens 1 through a colour splitting prism 2, and is irradiated on each of three CCD image sensors 3R, 3G and 3B which form an image pick-up section 3 for imaging operation.

The image pick-up beam guided to the image pick-up section 3 from the lens 1 through the prism 2 is thereby separated into three primary colour beams, that is, a red beam R, a green beam G, and a blue beam B. Each optical image of these three primary colour beams R, G and B is formed on the respective image pick-up planes of the respective image sensors 3R, 3G and 3B.

Pictures of each optical image from the three primary colour beams R, G and B are obtained at the respective image sensors 3R, 3G and 3B, which supply three primary colour signals, namely, a red signal Er, a green signal Eg, and a blue signal Eb as the image pick-up outputs. The image sensor 3G for producing the green optical image supplies the green signal Eg having 525/2 lines, whereas the other image sensors 3R and 3B supply the red signal Er and blue signal Eb, respectively, each of which have 525 lines, which is twice as many as the image sensor 3G, and as the normal broadcasting standard for the NTSC system.

The three primary colour signals Er, Eg and Eb thus obtained at the image pick-up section 3 are supplied to an analogue-to-digital (A/D) converting section 5 through set amplifiers 4R, 4G and 4B, respectively. In the A/D converting section 5, the three primary colour signals Er, Eg and Eb are digitised in three A/D converters 5R, 5G and 5B so as to form data Dr, Dg and Db which correspond to each colour. The data Dr, Dg and Db are supplied to a processing section 7 through a registration adjustment processing section 6. After gamma adjustment and/or clamp procedure have been performed, for example, in the respective processing circuits 7R, 7G and 7B of the processing section 7, the data Dr, Dg and Db appear at an output terminal 9 after passing through an encoder 8 which converts them into colour image data, Dout, for example, of the NTSC system.

In the registration adjustment processing section 6, registration adjustment of the red signal Er and the blue signal Eb obtained at the image sensors 3R and 3B respectively, is performed on the basis of the green signal Eg, which is obtained at the other image sensor 3G.

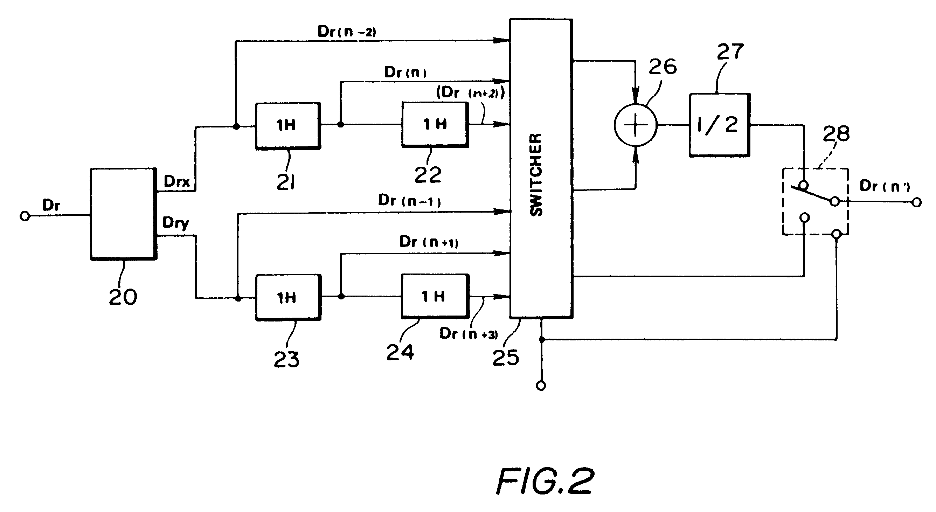

The registration adjustment processing section 6 comprises two registration adjusting circuits 6R and 6B which execute adjustments of the red data Dr and the blue data Db by changing the number of scanning lines. As seen in Figure 2, the registration adjusting circuit 6R for executing the adjustment processing of the red data Dr comprises a timing axis converting circuit 20 which alternately distributes the scanning lines of the red data Dr having 525 lines per field and converts it to a timing axis having 525/2 lines per field. Four 1H delay circuits 21, 22, 23 and 24 each of which causes a delay corresponding to one horizontal scanning period (1H of the NTSC system) receive the outputs Drx and Dry of the converter 20. A switcher 25, which is controlled by control data from a control section 10 which will be described later, receives data from the converter 20 and the delay circuits 21, 22, 23 and 24. An adder 26 for adding data selected by the switcher 25 supplies an output to a coefficient circuit 27 which multiplies the added outputs of the adder 26 by a coefficient of 1/2. A switch 28 selects data at the output of the coefficient circuit 27 or from the switcher 25. In the circuit 6R, there are obtained red data Dr(n-2), Dr(n-1), Dr(n), Dr(n+1), Dr(n+2) and Dr(n+3) which are adjacent to each other in the vertical direction of one frame picture element, by deriving two-channel red data Drx and Dry which comprises the red data Dr from the timing axis converting circuit 20 and red data with 1H delay from the four 1H delay circuits 21, 22, 23 and 24. Regarding data Dr(n-2), Dr(n-1), Dr(n), Dr(n+1), Dr(n+2) and Dr(n+3), by changing the number of scanning lines from 525 to 525/2, the registration adjustment processing section 6 performs an adjusting operation so as to obtain registration errors of less than τ/4, where τ is the pixel pitch in the vertical direction of the image sensor 3R. This procedure will now be described.

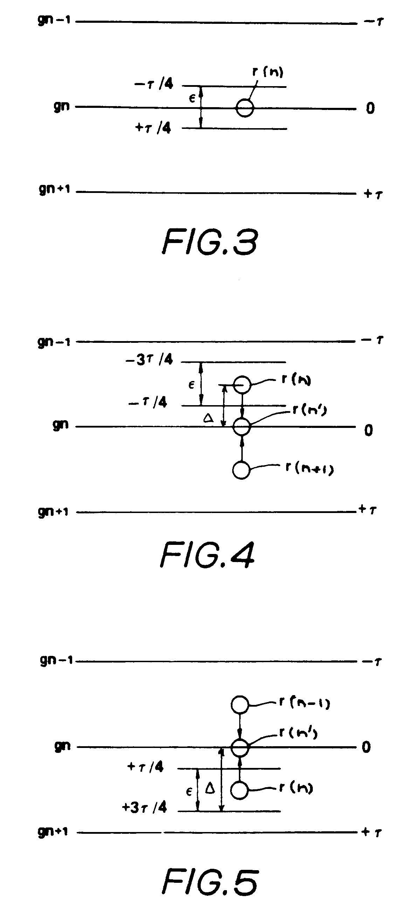

As shown in Figure 3, when a registration error Δ in the vertical direction from a pixel r(n) of the image sensor 3R corresponding to a pixel g(n) in one frame of the image sensor 3G is present in the range ε of - τ/4 is less than Δ is less than + τ/4, the red data Dr(n) corresponding to the pixel r(n) are selected by the switcher 25 and the switch 28 to be supplied as the red data Dr(nʹ) for which the registration adjustment has been effected. When the registration error Δ is present in the range ε of -3τ/4 is less than Δ is less than - τ/4 as shown in Figure 4, the red data Dr(n) corresponding to the pixel r(n) and the red data Dr(n+1) corresponding to the pixel r(n+1) which is one line after, are selected by the switch 25 to obtain red data Dr(nʹ) for which registration adjustment of:

$\text{Dr(nʹ) = [Dr(n) + Dr(n+1)]/2}$

has been effected at the output through the switch 28. Moreover, when the registration error Δ is present in the range ε of + τ/4 is less than Δ is less than +3τ/4 as shown in Figure 5, red data Dr(n) corresponding to the pixel r(n) and red data Dr(n-1) corresponding to the pixel r(n-1) which is one line before are selected by the switcher 25 so as to produce output red data Dr(nʹ) for which registration adjustment of:

$\text{Dr(nʹ) = [Dr(n) + Dr(n-1)]/2}$

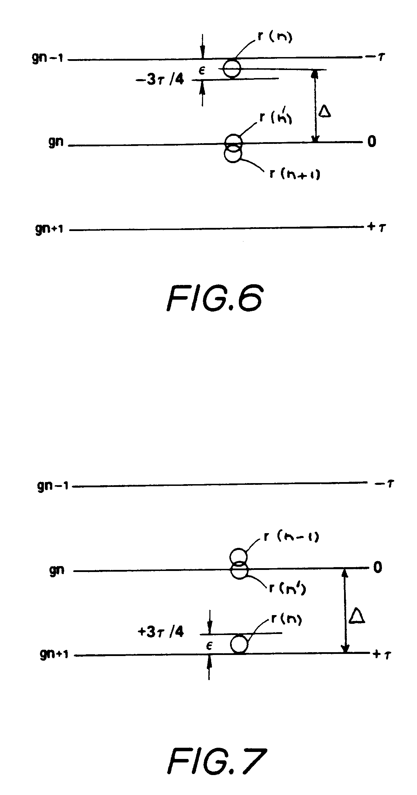

has been effected through the switch 28. Also, when the registration error Δ is present in the range ε of - τ is less than Δ is less than -3τ/4 as shown in Figure 6, red data Dr(n+1) which corresponds to the pixel r(n+2) which is one line after are selected by the switcher 25 and the switch 28 so as to supply red data Dr(nʹ) for which registration adjustment has been effected. Also, when the registration error Δ is present in the range ε of +3τ/4 is less than Δ is less than + τ as shown in Figure 7, red data Dr(n-1) which correspond to the pixel r(n-1) which is one line after are selected by the switch 25 and the switch 28 to be supplied as red data Dr(nʹ) for which the registration adjustment has been effected.

The registration adjusting circuit 6B for executing adjustment of the blue data Db, has a circuit construction which is similar to the registration adjusting circuit 6R for the red data Dr.

The control section 10 which controls the operation of the registration adjustment processing section 6 calculates the control data which are required to adjust the registration error of the red and blue data Dr and Db based on the green data Dg in the respective registration adjusting circuits 6R and 6B by interpolation on the basis of each colour data Dr, Dg and Db, which have been previously obtained by photographing a test chart. The control data are stored in a control storage device 11. The registration adjustment processing section 6 performs registration adjustment during the actual photographing operation by changing the number of scanning lines of the red data Dr and the blue data Db from 525 lines to 525/2 lines under control of the control section 10 on the basis of the control data stored in the storage device 11.

As is evident from the above description of the embodiment, the registration adjustment is executed by changing the number of scanning lines, and it becomes possible to execute registration adjustment with high precision with the registration adjusting circuits 6R and 6B having a simple construction, while producing little or no deterioration of the vertical resolution.

Stated differently, in an embodiment of solid-state colour image pick-up, the registration adjustment is executed by changing the number of scanning lines of the colour signals which are supplied from the solid-state image sensor of the image pick-up section to the desired number, so that deterioration of the vertical resolution is prevented. Also, it becomes possible to facilitate superimposition of data during the registration adjustment during electrical signal processing, and thus colour image pick-up outputs of high picture quality can be obtained.

## Claims

1. A solid-state image pick-up apparatus comprising:
a colour splitting prism (2) which receives incident light images and splits them into the respective colour elements of red, blue and green light beams; and
a plurality of solid-state image pick-up elements (3R, 3G, 3B) sensitive to the respective red, blue and green beams for supplying analogue signals of three primary colours;
characterized by:
said solid-state image pick-up elements (3R, 3B) for supplying at least red and blue analogue signals having a number of scanning lines such that higher vertical resolution can be obtained than with the usual number of scanning lines used in a normal broadcasting standard;
a plurality of analogue-to-digital converters (5R, 5C, 5B) for digitising the analogue signals of the three primary colours;
a registration adjustment means (6) to which said digital signals of the three primary colours are supplied, and including delay means (21 to 24) for delaying the digital signals corresponding to the red and blue beams and combining means (25, 26) for selectively combining the input and output signals of said delay means (21 to 24);
control means (10) for controlling said registration adjustment means (6); and
a control storage device (11) for supplying data obtained by photographing a test chart for controlling said registration adjustment means (6) to said control means (10).

2. Apparatus according to claim 1 wherein in said solid-state image pick-up elements (3R, 3G) supplying red and blue analogue signals, the number of vertical scanning lines is double the prescribed number of lines of the usual broadcasting standard.

3. Apparatus according to claim 2 wherein said registration adjustment means (6) comprises a plurality of circuits (6R, 6B) which interpolate the digital signals corresponding to the red and blue beams, and said plurality of circuits (6R, 6B) respectively form optimum interpolation signals from three adjacent scanning lines.

4. Apparatus according to claim 3 wherein said control storage device (11) has stored therein a ratio for composing three adjacent scanning lines.

## Patentansprüche

1. Festkörper-Bildaufnahmevorrichtung
mit einem Farbteilerprisma (2), das auftreffende Lichtbilder auffängt und in Farbelemente roter, blauer und grüner Lichtstrahlen zerlegt,
sowie mit mehreren, auf die roten, blauen bzw. grünen Lichtstrahlen ansprechenden Festkörper-Bildaufnahmeelementen (3R, 3B, 3G), die Analogsignale der drei Primärfarben liefern,
**dadurch gekennzeichnet,**
daß zumindest die Festkörper-Bildaufnahmeelemente (3R, 3B) zur Lieferung der roten und der blauen Analogsignale eine solche Zahl von Abtastzeilen besitzen, daß mit ihnen eine höhere vertikale Auflösung erreichbar ist als mit der üblichen in einer normalen Rundfunkfernsehnorm verwendeten Zahl von Abtastzeilen, ferner
**gekennzeichnet durch**
mehrere Analog-Digitalwandler (5R, 5B, 5G) zur Digitalisierung der Analogsignale der drei Primärfarben,
eine mit den digitalisierten Signalen der drei Primärfarben beaufschlagte Farbdeckungs-Justiereinrichtung (6), die Verzögerungseinrichtungen (21 bis 24) zur Verzögerung der dem roten und dem blauen Strahl entsprechenden Digitalsignale sowie eine Kombinationseinrichtung (25, 26) zum selektiven Kombinieren der Eingangs- und Ausgangssignale der Verzögerungseinrichtung aufweist,
eine Steuereinrichtung (10) für die Steuerung der genannten Farbdeckungs-Justiereinrichtung (6) und
eine Steuerspeichervorrichtung (11) zur Lieferung von durch das Fotografieren eines Testbildes gewonnenen Daten zur Steuerung der Farbdeckungs-Justiereinrichtung (6) an die Steuereinrichtung (10).

2. Vorrichtung nach Anspruch 1, bei der die Zahl der vertikalen Abtastzeilen in den Festkörper-Bildaufnahmeelementen (3R, 3B) zur Lieferung der roten und blauen Analogsignale doppelt so groß ist wie die vorgeschriebene Zeilenzahl der üblichen Rundfunkfernsehnorm.

3. Vorrichtung nach Anspruch 2, bei der die Farbdeckungs-Justiereinrichtung (6) mehrere Schaltungen (6R, 6B) aufweist, die die dem roten und dem blauen Strahl entsprechenden Digitalsignale interpolieren, wobei diese Schaltungen (6R, 6B) optimale Interpolationssignale aus drei benachbarten Abtastzeilen bilden.

4. Vorrichtung nach Anspruch 3, bei der in der Steuerspeichervorrichtung (11) das Verhältnis gespeichert ist, mit dem drei benachbarten Abtastzeilen zusammengesetzt werden.

## Revendications

1. Appareil de prise d'image à l'état solide comprenant :
un prisme de séparation de couleur (2) qui reçoit des images lumineuses incidentes et qui les sépare en éléments couleur respectifs de faisceaux lumineux rouge, bleu et vert ; et
une pluralité d'éléments de prise d'image à l'état solide (3R, 3G, 3B) sensibles aux faisceaux respectifs rouge, bleu et vert pour appliquer des signaux analogiques de trois couleurs primaires ;
caractérisé par :
lesdits éléments de prise d'image à l'état solide (3R, 3B) pour appliquer au moins des signaux analogiques rouge et bleu comportent un certain nombre de lignes de balayage de telle sorte qu'une résolution verticale meilleure puisse être obtenue par comparaison avec celle obtenue avec le nombre habituel de lignes de balayages utilisées dans un standard de diffusion normal ;
une pluralité de convertisseurs analogiques/numériques (5R, 5C, 5B) pour numériser les signaux analogiques des trois couleurs primaires ;
un moyen de réglage de repérage (6) auquel lesdits signaux numériques des trois couleurs primaires sont appliqués, et incluant un moyen de retard (21 à 24) pour retarder les signaux numériques correspondant aux faisceaux rouge et bleu et un moyen de combinaison (25, 26) pour combiner de façon sélective les signaux d'entrée et de sortie dudit moyen de retard (21 à 24) ;
un moyen de commande (10) pour commander ledit moyen de réglage de repérage (6) ; et
un dispositif de stockage de commande (11) pour appliquer des données obtenues en photographiant une mire normalisée pour commander ledit moyen de réglage de repérage (6) par rapport audit moyen de commande (10).

2. Dispositif selon la revendication 1, dans lequel dans lesdits éléments de prise d'image à l'état solide (3R, 3G) qui appliquent des signaux analogiques rouge et bleu, le nombre de lignes de balayage vertical est le double du nombre prescrit de lignes du standard de diffusion habituel.

3. Dispositif selon la revendication 2, dans lequel ledit moyen de réglage de repérage (6) comprend une pluralité de circuits (6R, 6B) qui interpolent les signaux numériques correspondant aux faisceaux rouge et bleu, et ladite pluralité de circuits (6R, 6B) forment respectivement des signaux d'interpolation optimum à partir de trois lignes de balayage adjacentes.

4. Dispositif selon la revendication 3, dans lequel ledit dispositif de mémoire de commande (11) a stocké en son sein un rapport de composition de trois lignes de balayage adjacentes.
